# EUROPEAN PATENT SPECIFICATION

(11) **EP 2 765 328 B1**
(45) Date of publication and mention of the grant of the patent: **20.06.2018**
(21) Application number: 11873576.0
(22) Date of filing: 06.10.2011
(51) Int. Cl.: F16F 15/02, F16F 15/315, F16F 15/14

(54) **DYNAMIC DAMPER**
DYNAMISCHER DÄMPFER
AMORTISSEUR DYNAMIQUE

(43) Date of publication of application: 13.08.2014
(73) Proprietor: Toyota Jidosha Kabushiki Kaisha, Toyota-shi, Aichi 471-8571 (JP)
(72) Inventor: TSUKANO, Fusahiro, Toyota-shi Aichi 471-8571 (JP)
(74) Representative: TBK
(86) International application number: PCT/JP2011/073093
(87) International publication number: WO 2013/051130

(56) References cited:
- GB-A- 1 307 607
- JP-A- H1 194 017
- JP-A- 2001 115 675
- JP-A- 2002 323 039
- US-A- 3 020 980
- US-A- 3 640 149
- US-A- 3 641 839

## Description

### TECHNICAL FIELD

The present invention relates to a dynamic damper arranged in a rotary member to absorb or suppress torsional vibrations of the rotary member resulting from torque pulses.

### BACKGROUND ART

In an automotive vehicle, rotary members such as a crankshaft of an engine, an input shaft of a transmission, a driveshaft, and members attached thereto etc. are subjected to torsional vibrations along its axis of rotation due to vibrations of the engine. Attempts have been made to dampen the resonant torsional vibrations - 1 -of the rotary member induced by piston firing impulses of the engine by mounting on the rotary member a dynamic damper. An example of the dynamic damper of this kind is disclosed in Japanese Patent Laid-Open JP 2000-18329 A.

The dynamic damper taught by Japanese Patent Laid-Open JP 2000-18329 A is comprised of a rolling chamber formed in a flywheel as a rolling member, an ellipsoidal rolling surface as an inner surface of the rolling chamber, a damper mass that rolls on the rolling surface to counteract to torsional vibrations induced by torque pulses. The damper mass is comprised of an annular flange fitted into a groove formed on the rolling surface. Provided that the flywheel is rotated at a substantially constant speed, the damper mass is centrifugally pushed onto a radially outermost portion of the rolling surface. When the torque pulses appear on the flywheel, the torsional vibrations of the flywheel is absorbed by the damper mass oscillating. To this end, number of oscillation of the damper mass per revolution is equalized with number of torque pulses exerted on the flywheel per revolution.

Thus, according to the teachings of Japanese Patent Laid-Open JP 2000-18329 A, the annular flange of the damper mass is engaged with the groove of the rolling surface. Therefore, the damper mass will not be displaced in an axial direction of the flywheel. That is, a posture of the damper mass rolling on the rolling surface can be stabilized.

However, in order to thus restrict the axial displacement of the damper mass, a structure the dynamic damper taught by Japanese Patent Laid-Open JP 2000-18329 A has to be complicated to form the annular flange on the damper mass and to form the groove on the rolling surface. In addition, strict working accuracy is required to allow the damper mass to roll smoothly on the rolling surface.

Furthermore, a dynamic damper according to the preamble of claim 1 is known from US 3 020 980 A. Further dynamic dampers are disclosed in US 3 641 389 A, US 3 640 149 A and GB 1 307 607 A.

### DISCLOSURE OF THE INVENTION

The present invention has been conceived noting the foregoing technical problems, and it is an object to provide a dynamic damper adapted to restrict a displacement of an inertial mass in an axial direction of a rotary member, without requiring a complicated structure.

According to the present invention, the above object is solved with a dynamic damper having the features of claim 1.

In order to achieve the above-explained object, according to the present invention, a pair of receiving faces is formed on the rolling surface in a manner such that reaction forces individually counteract each load exerted thereto by the inertial mass from two directions symmetrically across a through-thickness central plane of the inertial mass perpendicular to an axial direction of the rotary member, and that lines of action of the reaction forces intersect at the through-thickness central plane. Therefore, components of each reaction force in the axial direction will act on the inertial mass equally in opposite directions.

Specifically, the pair of the receiving faces is formed on both width ends of the rolling surface. Alternatively, the receiving faces may also be formed on a width center of the rolling surface.

Specifically, the inertial mass is comprised of: a weight that has a predetermined mass; a plurality of rolling members that roll on the rolling surface; and a retainer member that holds the rolling member in a rotatable manner.

According to the present invention, for example, a plurality of arrays of the rolling members is arranged in the circumferential direction of the rotary member symmetrically across the through-thickness central plane of the inertial mass.

Preferably, both of a spherical member and a column member may be used as the rolling member.

In addition, the receiving face may be formed not only to have a flat cross-sectional shape perpendicular to the through-thickness central plane of the inertial mass but also to have a curved cross-sectional shape perpendicular to the through-thickness central plane of the inertial mass.

According to the present invention, therefore, the inertial mass is oscillated by the torsional vibrations of the rotary member. For this purpose, receiving faces are formed at least partially on the rolling surface in a manner such that reaction forces individually counteract each load exerted thereto by the inertial mass symmetrically across a through-thickness central plane of the inertial mass perpendicular to an axial direction of the rotary member. Therefore, components of each reaction force in the axial direction will act on the inertial mass equally in opposite directions. That is, the component vectors of the reaction forces counteract to each other so that a displacement of the inertial mass in the axial direction is prevented. In other words, the inertial mass is allowed to oscillate stably in the circumferential direction to damp the torsional vibrations of the rotary member without being displaced in the axial direction by an external force. That is, the inertial mass is allowed to oscillate without colliding against an inner wall of the damper housing so that collision noises can be reduced. In addition, the actual number of oscillation per revolution will not deviate significantly from the designed number of oscillation per revolution. For the reasons above, according to the present invention, damping performance of the dynamic damper can be improved.

As described, the receiving face is adapted to balance the reaction forces applied to the inertial mass across the through-thickness central plane of the inertial mass. For this purpose, the receiving faces may be formed not only on both width ends of the rolling surface but also on the width center of the rolling surface. Therefore, design freedom of the receiving face can be expanded.

Specifically, the receiving face is formed in a manner such that lines of action of the reaction forces applied to the inertial mass intersect at the through-thickness central plane of the inertial mass. Therefore, a moment to incline the inertial mass will not be generated. For this reason, the inertial mass is allowed to oscillate stably, and the actual number of oscillation per revolution will not deviate significantly form the designed number of oscillation per revolution.

As described, the inertial mass is comprised of: a weight having a predetermined mass; a plurality of rolling members that roll on the rolling surface; and a retainer member that holds the rolling member in a rotatable manner. Specifically, the weight of the inertial mass is sustained by the plurality of rolling members rolling on the rolling face. To this end, a pair of the retainer members may be used to hold a plurality of the rolling members therein while restricting the rolling direction. That is, since a structure of the retainer member is thus simple, the retainer member can be manufactured without requiring high processing and designing accuracy. Therefore, design factors which might affect a damping performance of the dynamic damper can be reduced.

As also described, a plurality of arrays of the rolling members is arranged in the circumferential direction of the rotary member symmetrically across the through-thickness central plane of the inertial mass. For example, two pairs of rolling members may be aligned on the rolling surface in the circumferential direction symmetrically across the through-thickness central plane of the inertial mass. In this case, the inertial mass is contacted with the rolling surface at four contact points. Therefore, the load on the rolling surface exerted by the inertial mass can be dispersed so that a deformation of the rolling surface at a specific location can be prevented. In addition, since the weight of the inertial mass is sustained by a plurality of the rolling members, the inertial mass is allowed to oscillate stably.

As also described, both of a spherical member and a column member may be used as the rolling member. That is, the rolling member is allowed to be rolled on the rolling surface by the torsional vibrations of the rotary member in both cases.

Further, the receiving face may be formed not only to have a flat cross-sectional shape perpendicular to the through-thickness central plane of the inertial mass but also to have a curved cross-sectional shape perpendicular to the through-thickness central plane of the inertial mass. In order to apply the reaction force to the inertial mass symmetrically across the through-thickness central plane thereby applying the components of each reaction force to the inertial mass equally in opposite directions of the axial direction, the receiving face may be formed into any of a flat face and a curved face. Therefore, the components of each reaction force can be applied to the inertial mass equally in opposite directions of the axial direction.

### BRIEF DESCRIPTION OF THE DRAWINGS

Fig. 1 is a view schematically showing one example of the dynamic damper according to the present invention.
Fig. 2 is a partial sectional view of the dynamic damper shown in Fig. 1.
Fig. 3 is a view showing a modified example of the dynamic damper shown in Figs. 1 and 2.
Fig. 4 is a view showing a modified example of the dynamic dampers shown in Figs. 1, 2 and 3.
Fig. 5 is a view schematically showing another example of the dynamic damper.
Fig. 6 is a view showing a modified example of the dynamic damper shown in Fig. 5.
Fig. 7 is a view showing a modified example of the dynamic dampers shown in Figs. 5 and 6.

### BEST MODE FOR CARRYING OUT THE INVENTION

Next, the present invention will be explained in more detail. The present invention related to a pendulum dynamic damper adapted to absorb torsional vibrations of a rotary member resulting from torque pulses by an oscillating motion of an inertial mass. To this end, number of oscillation of the inertial mass per revolution is equalized with number of torque pulses per revolution exerted on the rotary member.

According to the present invention, a damper housing is a cylindrical space formed radially outer side of a rotational center of the rotary member in a manner such that a geometrical center thereof extends in parallel with a rotational center of the rotary member, and the inertial mass is held in the damper housing thus formed. A rolling surface on which the inertial mass rolls is formed at least partially on an inner surface of the damper housing. According to the present invention, the rolling surface includes a receiving face formed in a manner such that reaction forces individually counteracts each load applied thereto by the inertial mass symmetrically across a through-thickness central plane of the inertial mass perpendicular to an axial direction of the rotary member. Therefore, components of each reaction force in the axial direction will act equally in opposite directions. That is, the inertial mass oscillating on the rolling surface to suppress torsional vibrations induced by torque pulses can be prevented to be displaced in the axial direction by the components of each reaction force thus counteracting in the axially opposite directions. Consequently, a posture of the inertial mass rolling on the rolling surface is stabilized. In addition, in order to suppress torsional vibrations induced by torque pulses, the number of oscillation of the inertial mass in the circumferential direction per revolution is adjusted to be equalized with the number of torque pulses per revolution exerted on the rotary member.

Specifically, the inertial mass is comprised of a weight having a predetermined mass, a plurality of rolling members that roll on the rolling surface, and a retainer member that holds the rolling member in a rotatable manner. The rolling member may be formed not only into a spherical shape but also into a column shape. Specifically, the rolling members are attached to the weight by the retainer member while being allowed to roll on the rolling surface. Even if the spherical rolling member is used, the retainer member will not be required to restrict the direction of a rolling motion of the rolling member. Therefore, when the torsional vibration of the rotary member is caused by the torque pulses, the weight is allowed to oscillate on the rolling surface together with the rolling members.

Thus, according to the present invention, the receiving face is formed within the rolling surface, in a manner such that reaction forces individually counteracts each load applied thereto by the inertial mass symmetrically across a through-thickness central plane of the inertial mass perpendicular to an axial direction of the rotary member. Specifically, the through-thickness central plane of the inertial mass is an orbit plane of the inertial mass revolving around the rotation axis that passes through the thickness center thereof perpendicular to the rotation axis of the rotary member. That is, the orbit plane of the inertial mass extends in parallel with a rotary face of the rotary member. Therefore, the receiving face is allowed to apply the reaction forces to the inertial mass in a manner such that the components of each reaction force in the axial direction will act equally in opposite directions. That is, provided that the rolling members) of the inertial mass are centrifugally pushed onto the rolling surface, the axial components of each reaction force applied to the weight through the rolling members will counteract or compensate with each other thereby maintaining the axial posture of the inertial mass. More specifically, lines of action of the reaction forces applied to the weight through the rolling members intersect at the thickness central plane. Therefore, it is possible to prevent a generation of a moment to displace the inertial mass in the axial direction.

According to the dynamic damper thus structured, therefore, the inertial mass can be prevented from being displaced in the axial direction of the rotary member even when oscillated on the rolling surface by the torsional vibrations of the rotary member resulting from the toque pulse. That is, the rolling motion of the inertial mass in the damper housing is restricted to the circumferential direction of the rotary member. In other words, a posture of the inertial mass oscillating on the rolling surface is stabilized. For this reason, the number of oscillation of the inertial mass per revolution will not be varied from the designed number. In addition, a noise resulting from a collision of the inertial mass with an inner face of the damper housing can be reduced. That is, the inertial mass is allowed to oscillate without colliding against a side face of the damper housing. Further, since the plurality of rolling members sustains the weight of the inertial mass, the centrifugal load of the inertial mass will not be concentrated to a specific location of the rolling surface. Therefore, the rolling surface will not be deformed or damaged by the inertial mass. Thus, according to the present invention, a vibration damping performance of the dynamic damper can be improved.

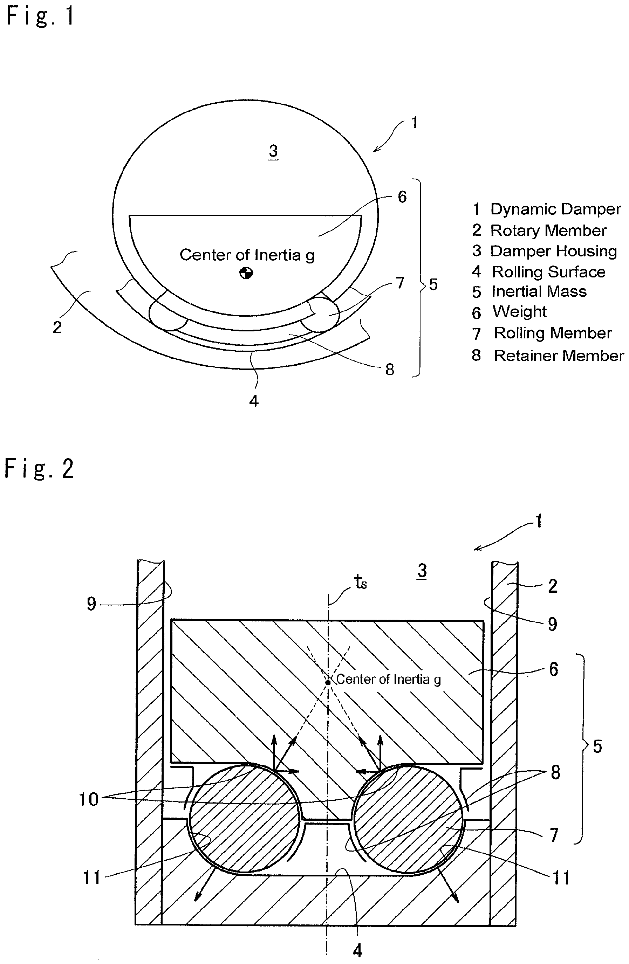

Next, the preferred embodiments of the present invention will be explained hereinafter with reference to the accompanying drawings. Referring now to fig. 1, there is shown one example of the dynamic damper according to the present invention. Fig. 1 is a front view showing a dynamic damper 1 formed in a rotary member 2. For example, the dynamic damper 1 is used to suppress vibrations in a vehicle, and for this purpose, the dynamic damper is arranged between an output side of a prime mover and a transmission. Specifically, a gasoline engine, a diesel engine, a hybrid drive unit comprising both motor and engine etc. are used as the prime mover of the vehicle. Accordingly, an output shaft of the prime mover or a member rotated integrally therewith corresponds to the rotary member 2 of this example.

The dynamic damper 1 is arranged in the rotary member 2. Specifically, the dynamic damper 1 is comprised of a damper housing 3 formed radially outer side of the rotary member 2, a rolling surface 4 formed on an inner surface of the damper housing 3, and an inertial mass 5 held in the damper housing 3. Specifically, the inertial mass 5 is comprised of a weight 6 having a predetermined mass, a plurality of rolling members 7 that roll on the rolling surface 4, and a retainer member 8 that attaches the rolling member 7 to the weight 6 in a rotatable manner. In order to absorb or suppress torsional vibrations of the rotary member 2 induced by torque pulses exerted on the rotary member 2, number of oscillation of the inertial mass 5 per revolution is adjusted to be equalized with number of torque pulses per revolution.

Referring now to Fig. 2, there is shown a partial cross-section of the dynamic damper 1 shown in Fig. 1. As can be seen from Fig. 1, the damper housing 3 is formed into a cylindrical shape, in a manner such that a geometrical center thereof extends in parallel with a rotational center axis of the rotary member 2. In this preferred example, the rolling surface 4 as a guide groove extends within a predetermined region of an inner surface of the damper housing 3 in the circumferential direction. As can be seen from Fig. 2, a depth of the rolling surface 4 is shallower than a diameter of the spherical rolling member 7. In addition, the damper housing 3 is comprised of an inner faces 9 closing openings of the damper housing 3. Therefore, the rolling member 7 thus attached to the weight 6 by the retainer member 8 is allowed to roll on the rolling surface 7.

As described, the weight 6 of the inertial mass 5 has a predetermined mass, and a center of inertia g of the inertial mass 6 is situated at the thickness center of the weight 6. As can be seen from Fig. 2, a flange is formed on an outer circumferential edge of the weight 6 within a range to be opposed to the rolling surface 4, in a manner to protrude from a thickness center of the weight 6. A contact face 10 is formed on each face of the flange to be contacted with the rolling member 7, and a curvature of each contact face 10 is identical to each other. That is, the contact faces 10 are formed in a manner to be symmetric across a through-thickness central plane of the inertial mass 5. Specifically, the through-thickness central plane of the inertial mass 5 is an orbit plane ts of the inertial mass 5 revolving around the rotation axis that passes through the thickness center thereof perpendicular to the rotation axis of the rotary member 2. Here, the curvature of each contact face 10 to be contacted with the rolling member 7 is individually smaller than that of the below-mentioned spherical rolling member 7.

Each rolling member 7 is individually held by the retainer member 8 while being allowed to roll on the rolling surface 4. In this preferred example, each rolling member 7 is individually formed into spherical shape, and a radius thereof is substantially identical to the depth of the rolling surface 4. Here, a mass of each rolling member 7 is individually smaller than that of the weight 6. According to the example shown in Figs. 1 and 2, a pair of rolling members 7 is individually arranged on both sides of the flange in the vicinity of each width end of the flange. That is, the weight 6 is sustained by two pairs of the rolling members 7, in other words, four rolling members 7. Specifically, the rolling member 7 is contacted with the contact face 10 of the flange of the weight 6 at a predetermined contact point.

As illustrated in Fig. 2, the pair of rolling member 7 of each side of the flange is held by a pair of plate-like retainer members 8 being opposed to each other. One of the end portions of each retainer member 8 is individually attached to the weight 6, and a curved face for holding the rolling member 7 is individually formed on the other end portion. A clearance between the retainer members 8 is slightly larger than a diameter of the rolling member 7, but a clearance between radially outermost portions of the curved faces is slightly shorter than a diameter of the rolling member 7. In addition, each radially outermost portion of the curved face of the retainer member 8 is individually isolated from the rolling surface 4 so that the rolling member 7 is partially exposed from a clearance between the radially outermost portions of the curved faces to be contacted with the rolling surface 4. Therefore, the rolling members 7 held between the retainer members 8 are allowed to roll on the rolling surface 4 in the circumferential direction. However, a rolling motion of the rolling member 7 in the axial direction of the rotary member 2 is restricted.

A receiving face 11 is formed on each width end of the rolling surface 4 symmetrically across the orbit plane ts in a manner to be opposed to the contact face 10 across the rolling member 7. As the contact face 10 of the weight 6, a curvature of the receiving face 11 of the rolling surface 4 is also smaller than that of the rolling member 7. For example, the receiving face 11 is formed to have a curvature identical to that of the contact face 10. Therefore, the rolling member 7 is contacted with the rolling surface 4 at a predetermined contact point. Thus, the rolling member 7 is contacted with both the contact face 10 of the weight 6 and the receiving face 11 of the rolling surface 4. That is, the rolling motion of the rolling member 7 in the axial direction of the rotary member 2 is also restricted by the contact face 10 and the receiving face 11.

Next, an action of the dynamic damper 1 thus structured will be explained hereinafter. When the dynamic damper 1 is rotated integrally with the rotary member 2, the inertial mass 5 is subjected to a centrifugal force according to a rotational speed. That is, the centrifugal force acting on the inertial mass 5 is amplified in accordance with an increase in the rotational speed. Then, when the centrifugal force acting on the inertial mass 5 exceeds a gravity acting on the inertial mass 5, the inertial mass 5 is displaced radially outwardly in the damper housing 3. Eventually, a behavior of the inertial mass 5 is stabilized at the radially outermost position of the damper housing 3 as illustrated in Fig. 1, under the condition where the centrifugal force acting on the inertial mass 5 is greater than the gravity acting on the inertial mass 5, provided that the rotary member 2 is not subjected to any of torque pulses or resultant torsional vibrations, and an external force in the axial direction.

In this situation, when the torque pulses or the resultant torsional vibrations appear on the rotary member 2, a rotational speed of the rotary member 2 is fluctuated instantaneously. However, the inertial mass 5 tends to inertially remain at the radially outermost position in the damper housing 3 even if the rotational speed of the rotary member 2 is fluctuated. Consequently, the inertial mass 5 is relatively displaced in both direction of the rotational direction by such instantaneous acceleration and deceleration resulting from the torque pulse, that is, the inertial mass 5 is oscillated in the damper housing 3. Specifically, such reciprocating motion of the inertial mass 5 is achieved by the rolling members 7 rolling on the rolling surface 4.

As described, the receiving faces 11 are formed symmetrically across the orbit plane ts. Therefore, as indicated by arrows in Fig. 2, the reaction force of each receiving face 11 is applied symmetrically to the weight 6 through each rolling member 7 across the orbit plane ts. That is, the reaction forces applied to the inertial mass 5 balance each other in the axial direction across the orbit plane ts. Consequently, at the contact faces 10, component vectors of the reaction forces are exerted equally on the weight 6 from opposite directions in the axial direction of the rotary member 2. That is, the component vectors counteract to each other in the axial direction of the rotary member 2. Therefore, an axial displacement of the inertial mass 5 can be prevented. In other words, lines of action of reaction forces intersect at the orbit plane ts.

Thus, the receiving faces 11 are formed on each width end of the rolling surfaces 4 symmetrically across the orbit plane ts. Therefore, the reaction force can be exerted equally by the receiving faces 11 on the weight 6 through the rolling members 7 from both width end sides of the rolling surface 4, thereby holding the inertial mass 5 in the axial direction of the rotary member 2. In addition, since the lines of action of reaction forces thus intersect at the orbit plane ts, a moment to incline the inertial mass 5 will not be generated. Therefore, the inertial mass 5 is allowed to stably oscillate only in the circumferential direction without deviating to other directions. For this reason, the actual number of oscillation per revolution will not deviate significantly form the designed number of oscillation per revolution. In addition, the inertial mass 5 oscillated by the torsional vibrations will not collide against the inner faces 9 of the damper housing 3 so that collision noises can be reduced. That is, the inertial mass 5 is allowed to oscillate in the damper housing 3 while keeping a distance from each inner face 9. More specifically, the components of the reaction forces are exerted on the weight 6 equally in the axial direction from both sides in a manner to counteract to each other or cancel each other out. Therefore, an orbit of the oscillating motion of the inertial mass 5 can be restricted to the direction along the rolling surface 4. That is, the receiving face 11 provides the inertial mass 5 with a self-aligning function by thus keeping a balance between the reaction forces exerted on the inertial mass 5 across the orbit plane ts.

As also described, the oscillating motion of the inertial mass 5 on the rolling surface 4 is achieved by the rolling members 7. Therefore, the load of the inertial mass 5 will not be concentrated in a specific location of the rolling surface 4. That is, the load of the inertial mass 5 exerted on the rolling surface 4 can be dispersed so that the rolling surface 4 will not be subjected to a pressure excessively at a specific location. Therefore, a deformation of the rolling surface 4 at a specific location can be prevented. In addition to the above-explained advantages, a pair of retainer members 8 for restricting the rolling direction of the rolling members 7 holds a plurality of the rolling members 7 therein. That is, a structure for holding the rolling members 7 can be simplified without requiring high processing and designing accuracy. Therefore, design factors which might affect a damping performance of the dynamic damper can be reduced. For these reasons explained above, according to the present invention, the damping performance of the dynamic damper can be improved.

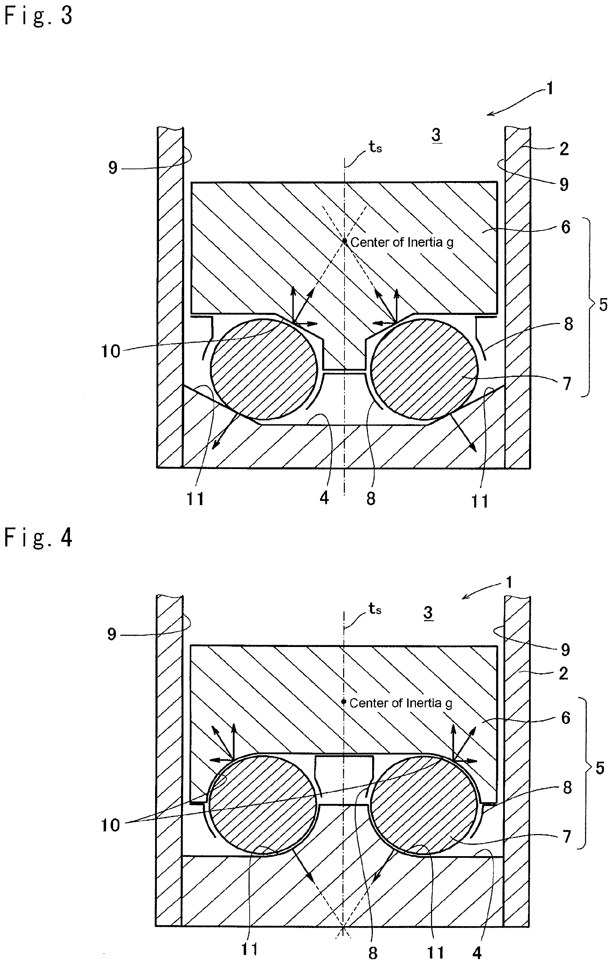

The example shown in Figs. 1 and 2 may be modified as illustrated in Fig. 3. According to the example shown in Fig. 3, both of the contact face 10 of the weight 6 and the receiving face 11 of the rolling surface 4 are formed into inclined flat surfaces. As the example shown in Figs. 1 and 2, the damper housing 3 is situated radially outer side of the rotary member 2, and formed into a cylindrical shape in a manner such that a geometrical center thereof extends in parallel with a rotational center axis of the rotary member 2. The rolling surface 4 also extends within a predetermined region of the inner surface of the damper housing 3 in the circumferential direction. According to the example shown in Fig. 3, the receiving face 11 is individually formed into an inclined flat surface on each width end of the rolling surface 4 symmetrically across the orbit plane ts. Specifically, an angle between the receiving surface 11 and an axial extension of the rolling surface 4 is smaller than 90 degrees.

Meanwhile, the contact face 10 is also formed individually into an inclined flat surface on both sides of the flange of the weight 6 in a manner to be opposed to the receiving surface 11 across the rolling member 7. Specifically, as can be seen from Fig. 3, the contact faces 10 are also formed symmetrically across the orbit plane ts. As the example shown in Figs 1 and 2, each pair of rolling members 7 is individually attached to the weight 6 by the pair of retainer members 8 while being allowed to roll on the rolling surface 4. In this example, each rolling member 7 is also formed into spherical shape, and a pair of rolling members 7 is individually arranged on both sides of the flange of the weight 6. That is, the weight 6 is also sustained by two pairs of the rolling members 7, in other words, four rolling members 7. Thus, the rolling member 7 is contacted individually with the contact face 10 of the weight 6 and with the receiving face 11 of the rolling surface 4 at each predetermined contact point.

Therefore, according to the example shown in Fig. 3, the reaction force of each receiving face 11 is also applied equally and symmetrically to the weight 6 through each rolling member 7 across the orbit plane ts. That is, the reaction forces applied to the inertial mass 5 balance each other in the axial direction across the orbit plane ts. Consequently, at the contact faces 10, component vectors of the reaction forces are exerted equally on the weight 6 from opposite directions in the axial direction of the rotary member 2. That is, the component vectors counteract to each other in the axial direction of the rotary member 2. Therefore, an axial displacement of the inertial mass 5 may also be prevented. In other words, the lines of action of reaction forces intersect at the orbit plane ts so that a moment to incline the inertial mass 5 will not be generated. Therefore, the inertial mass 5 is allowed to stably oscillate only in the circumferential direction without deviating to the other directions and without colliding against the inner faces 9 of the damper housing 3 so that collision noises can be reduced. In addition, the oscillating motion of the inertial mass 5 on the rolling surface 4 is also achieved by the rolling members 7. Therefore, the load of the inertial mass 5 will not be concentrated in a specific location of the rolling surface 4. That is, the load of the inertial mass 5 exerted on the rolling surface 4 can be dispersed so that the rolling surface 4 will not be subjected to a pressure excessively at a specific location. Therefore, a deformation of the rolling surface 4 at a specific location can be prevented. For these reasons, according to the example shown in Fig. 3, the damping performance of the dynamic damper may also be improved.

The foregoing examples shown in Figs. 1 to 3 may be modified as illustrated in Fig. 4. According to the example shown in Fig. 4, a flange is formed on a width center of the rolling surface 4, and the receiving faces 11 are formed on both sides of the flange. As the foregoing examples, the damper housing 3 is also situated radially outer side of the rotary member 2, and formed into a cylindrical shape in a manner such that a geometrical center thereof extends in parallel with a rotational center axis of the rotary member 2. The rolling surface 4 also extends within a predetermined region of the inner surface of the damper housing 3 in the circumferential direction. According to the example shown in Fig. 4, the flange is formed on the width center of the rolling surface 4, and the receiving faces 11 is individually formed into a curved face on both sides of the flange symmetrically across the orbit plane ts.

Meanwhile, the contact face 10 is individually formed into a curved face on each width end of the weight 6 to be opposed to the receiving face 11 across the rolling member 7. That is, as can be seen from Fig. 4, the contact faces 10 are also formed symmetrically across the orbit plane ts. As the foregoing examples, each rolling member 7 is also formed into spherical shape, and a curvature of the contact face 10 and a curvature of the receiving face 11 are individually smaller than that of the rolling member 7. A pair of rolling members 7 is individually arranged on both sides of the flange of the rolling surface 4, and those rolling members 7 are attached to the weight 6 by the pair of retainer members 8 while being allowed to roll on the rolling surface 4. That is, the weight 6 is also sustained by two pairs of the rolling members 7, in other words, four rolling members 7. Thus, the rolling member 7 is contacted individually with the contact face 10 of the weight 6 and with the receiving face 11 of the rolling surface 4 at each predetermined contact point.

According to the example shown in Fig. 4, therefore, the reaction force of each receiving face 11 is also applied equally and symmetrically to the weight 6 through each rolling member 7 across the orbit plane ts. That is, the reaction forces applied to the inertial mass 5 balance each other in the axial direction across the orbit plane ts. Consequently, at the contact faces 10, component vectors of the reaction forces are exerted equally on the weight 6 in the directions away from each other in the axial direction of the rotary member 2. That is, the component vectors cancel each other in the axial direction of the rotary member 2. Therefore, an axial displacement of the inertial mass 5 may also be prevented. In other words, the lines of action of reaction forces intersect at the orbit plane ts so that a moment to incline the inertial mass 5 will not be generated. Therefore, the inertial mass 5 is allowed to stably oscillate only in the circumferential direction without deviating to the other directions and without colliding against the inner faces 9 of the damper housing 3 so that collision noises can be reduced. In addition, the oscillating motion of the inertial mass 5 on the rolling surface 4 is also achieved by the rolling members 7. Therefore, the load of the inertial mass 5 will not be concentrated in a specific location of the rolling surface 4. That is, the load of the inertial mass 5 exerted on the rolling surface 4 can be dispersed so that the rolling surface 4 will not be subjected to a pressure excessively at a specific location. Therefore, a deformation of the rolling surface 4 at a specific location can be prevented. For these reasons, according to the example shown in Fig. 4, the damping performance of the dynamic damper may also be improved.

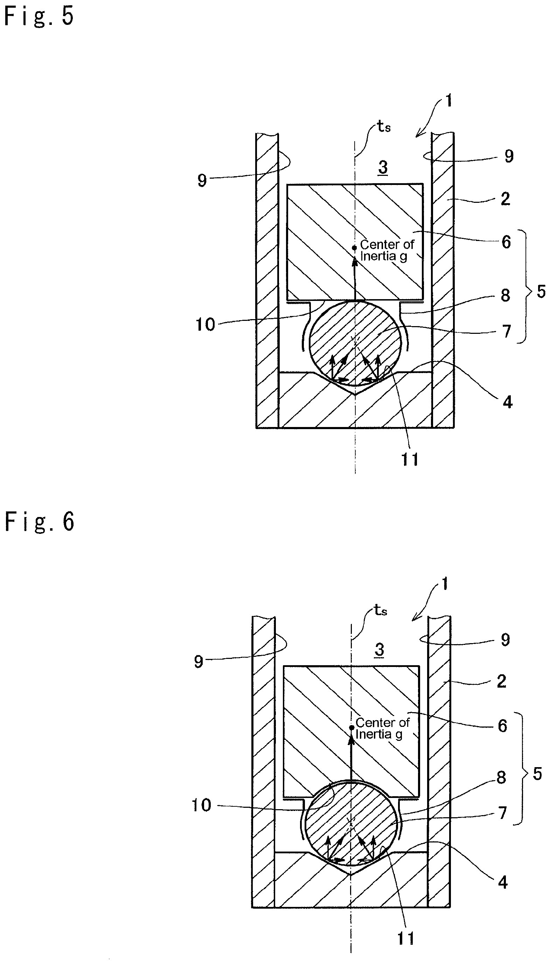

Referring now to Fig. 5, there is shown another example of the present invention. According to the example shown in Fig. 5, the weight 6 is sustained by only one pair of rolling members 6, and the center of inertia g of the inertial mass 6 and a geometrical center of the rolling member 7 are aligned coaxially As the foregoing examples, the damper housing 3 is also situated radially outer side of the rotary member 2, and formed into a cylindrical shape in a manner such that a geometrical center thereof extends in parallel with a rotational center axis of the rotary member 2. Also, the rolling surface 4 extends within a predetermined region of the inner surface of the damper housing 3 in the circumferential direction. According to the example shown in Fig. 5, a V-shaped groove is formed on the width center of the rolling surface 4 in the circumferential direction of the rotary member 2, and a cross-sectional shape of the V-shaped groove is symmetrically across the orbit plane ts. Therefore, each inclined face of the V-shaped groove individually serves as the receiving face 11.

Specifically, according to the example shown in Fig. 5, at least a single pair of rolling members 7, that is, at least two rolling members 7 aligned in the circumferential direction of the rotary member 2 are used to sustain the weight 6. To this end, each rolling member 7 is individually attached to the weight 6 by the retainer members 8 while being allowed to roll on the rolling surface 4, in a manner such that the geometrical center thereof is aligned coaxially with the center of inertia g of the inertial mass 6. In this example, the weight 6 is provided with a flat outer circumferential face serving as the contact face 10 to be contacted with the rolling member 7. Therefore, each rolling member 7 is contacted individually with the contact face 10 of the weight 6 at a point on the orbit plane ts, and contacted individually with the receiving face 11 of the rolling surface 4 at symmetrical points across the orbit plane ts.

The example shown in Fig. 5 may be partially modified as illustrated in Fig. 6. As can be seen from Fig. 6, the contact face 10 is formed on the outer circumferential face of the weight 6 in a manner to have an arcuate cross section perpendicular to the orbit plane ts. Specifically, the contact face 10 is formed to have the arcuate cross-section that is symmetrical across the orbit plane ts, and a curvature thereof is smaller than that of the rolling member 7. In this example, the weight 6 is also sustained by a single pair of rolling members 7 aligned in the circumferential direction of the rotary member 2. That is, each rolling member 7 is also attached to the weight 6 by the retainer members 8 while being allowed to roll on the rolling surface 4, in a manner such that the geometrical center thereof is aligned coaxially with the center of inertia g of the inertial mass 6. Therefore, each rolling member 7 is contacted individually with the contact face 10 of the weight 6 at a point on the orbit plane ts, and contacted individually with the receiving face 11 of the rolling surface 4 at symmetrical points across the orbit plane ts.

According to the examples shown in Figs. 5 and 6, therefore, the reaction force of the receiving face 11 is applied to the rolling member 7 equally and symmetrically across the orbit plane ts. Consequently, the reaction force of the receiving face 11 is applied to the weight 6 through the rolling member 7 along the orbit plane ts. As a result, at the receiving faces 11, the component vectors of the reaction forces are exerted equally on the rolling member 7 from opposite directions in the axial direction of the rotary member 2. That is, the component vectors counteract to each other in the axial direction of the rotary member 2. Therefore, an axial displacement of the inertial mass 5 may also be prevented. In other words, the lines of action of reaction forces intersect in the rolling member 7 at the orbit plane ts so that a moment to incline the inertial mass 5 will not be generated.

Thus, according to the examples shown in Figs. 5 and 6, only one pairs of the rolling members 7 is used to sustain the weight 6. However, the axial displacement of the inertial mass 5 may also be prevented by thus forming the receiving face 11 into the V-shaped groove on the rolling surface 4. Therefore, the inertial mass 5 is also allowed to stably oscillate in the circumferential direction without colliding against the inner faces 9 of the damper housing 3 so that collision noises can be reduced. In addition, the oscillating motion of the inertial mass 5 on the rolling surface 4 is also achieved by the rolling members 7. Therefore, the load of the inertial mass 5 will not be concentrated in a specific location of the rolling surface 4. That is, the load of the inertial mass 5 exerted on the rolling surface 4 can be dispersed so that a deformation of the rolling surface 4 at a specific location can be prevented. Further, according to the examples shown in Figs. 5 and 6, number of rolling members 7 can be reduced in comparison with the examples shown in Figs. 1 to 4. Therefore, the dynamic damper 1 is allowed to be downsized and lightened, and a cost thereof can be reduced. For these reasons, according to the examples shown in Figs. 5 to 6, the damping performance of the dynamic damper may also be improved.

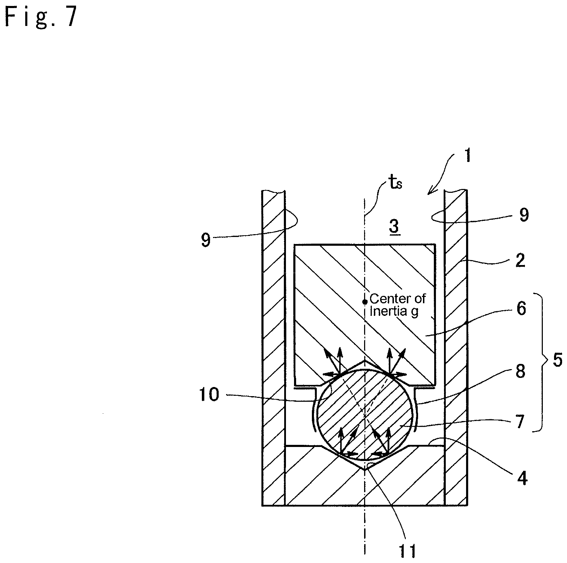

The examples shown in Figs. 5 and 6 may be partially modified as illustrated in Fig. 7. According to the example shown in Fig. 7, the contact face 10 is also formed into a V-shaped groove to be opposed to the receiving face 11. Specifically, the contact face 10 is formed into an inverted V-shaped groove on the outer circumferential face of the weight 6 symmetrically across the orbit plane ts. As the foregoing examples, the damper housing 3 is also situated radially outer side of the rotary member 2, and formed into a cylindrical shape in a manner such that a geometrical center thereof extends in parallel with a rotational center axis of the rotary member 2. Also, the rolling surface 4 extends within a predetermined region of the inner surface of the damper housing 3 in the circumferential direction. According to the example shown in Fig. 7, the V-shaped groove is also formed in the width center of the rolling surface 4 in the circumferential direction of the rotary member 2, and a cross-sectional shape of the V-shaped groove is symmetrically across the orbit plane ts. Therefore, each inclined face of the V-shaped groove individually serves as the receiving face 11.

According to the example shown in Fig. 7, the weight 6 is also sustained by a single pair of rolling members 7 aligned in the circumferential direction of the rotary member 2. Specifically, each rolling member 7 is also attached to the weight 6 by the retainer members 8 while being allowed to roll on the rolling surface 4, in a manner such that the geometrical center thereof is aligned coaxially with the center of inertia g of the inertial mass 6. In this example, the contact face 10 to be contacted with the rolling member 7 is also formed into a V-shaped groove to be symmetrical with the receiving face 11. That is, the V-shaped contact face 10 is formed to be symmetrically across the orbit plane ts. Therefore, each rolling member 7 is contacted individually with the contact face 10 of the weight 6 and the receiving face 11 of the rolling surface 4 at symmetrical points across the orbit plane ts.

According to the example shown in Fig. 7, therefore, the reaction forces of the receiving face 11 is applied to the weight 6 through the rolling member 7 equally and symmetrically across the orbit plane ts, that is, in a manner to intersect at the orbit plane ts. Consequently, at the contact face 10, component vectors of the reaction forces are exerted equally on the weight 6 in the directions away from each other in the axial direction of the rotary member 2. That is, the component vectors cancel each other in the axial direction of the rotary member 2 thereby preventing an axial displacement of the inertial mass 5.

Meanwhile, at the receiving face 11, the component vectors of the reaction forces are also exerted equally on the rolling member 7 from both sides in the axial direction of the rotary member 2. That is, the component vectors counteract to each other in the axial direction of the rotary member 2. Therefore, an axial displacement of the inertial mass 5 may also be prevented.

Thus, according to the example shown in Fig. 7, the weight 6 is also sustained by only one pair of the rolling members 7. However, the axial displacement of the inertial mass 5 may also be prevented by thus forming the contact face 10 and the receiving face 11 into the V-shaped grooves. Therefore, the inertial mass 5 is also allowed to stably oscillate in the circumferential direction without colliding against the inner faces 9 of the damper housing 3 so that collision noises can be reduced. In addition, the oscillating motion of the inertial mass 5 on the rolling surface 4 is also achieved by the rolling members 7. Therefore, the load of the inertial mass 5 will not be concentrated in a specific location of the rolling surface 4. That is, the load of the inertial mass 5 exerted on the rolling surface 4 can be dispersed so that a deformation of the rolling surface 4 at a specific location can be prevented.

In conclusion, according to the dynamic damper 1 of the present invention, the receiving face 11 is formed at least partially on the rolling surface 4 in a manner such that the reaction forces is applied to the rolling member 7 or the weight 6 symmetrically across the orbit plane ts. Therefore, the inertial mass 5 is prevented from being displaced in the axial direction of the rotary member 2 while being allowed to oscillate stably in the circumferential direction. In addition, the receiving face 11 physically prevents such axial displacement of the inertial mass 5. Therefore, the inertial mass 5 will not be disturbed by an external force so that the number of oscillation of the inertial mass 5 per revolution will not be varied from the designed number. In addition, since the receiving face 11 is thus adapted to restrict the axial displacement of the inertial mass 5, the retainer member 8 is required only to hold the rolling members 7 in a rotatable manner. That is, it is unnecessary for the retainer member 8 to restrict the axial displacement of the rolling member 7. Therefore, the retainer member 8 can be manufactured without requiring high processing and designing accuracy. Thus, according to the present invention, the dynamic damper 1 can be manufactured without requiring a complicated working, and the damping performance of the dynamic damper 1 can be improved by restricting the axial displacement of the inertial mass 5.

Lastly, the present invention should not be limited to the forgoing examples. For example, a column shaped member may also be used as the rolling member 7 instead of the spherical member.

## Claims

1. A dynamic damper, comprising:
a damper housing (3) formed into a cylindrical shape and formed radially outer side of a rotational center of a rotary member (2) subjected to torsional vibrations (3) in a manner such that a geometrical center thereof extends in parallel with a rotational center axis of the rotary member (2);
a rolling surface (4) formed on an inner wall of the damper housing;
an inertial mass (5) held in the damper housing (3) to damp the torsional vibrations by a circumferential oscillating motion thereof on the rolling surface (4) resulting from the torsional vibration; and
a pair of receiving faces (11) that is formed on the rolling surface (4) symmetrically across a through-thickness central plane (ts) of the inertial mass (5);
wherein the receiving faces (11) are formed in a manner such that reaction forces thereof individually counteracts each load exerted thereto by the inertial mass (5) from two directions symmetrically across the through-thickness central plane (ts) of the inertial mass (5) perpendicular to an axial direction of the rotary member (2), and that lines of action of the reaction forces intersect at the through-thickness central plane (ts), so that components of each reaction force in the axial direction will act equally in opposite directions, wherein the pair of the receiving faces (11) is formed on both width ends of the rolling surface (4) or on a width center of the rolling surface (4), wherein the inertial mass (5) is comprised of:
a weight that has a predetermined mass;
a plurality of rolling members (7) that roll on the rolling surface (4); and
a retainer member (8) that holds the rolling member (7) in a rotatable manner, **characterized in that**
a plurality of arrays of the rolling members (7) is arranged in the circumferential direction of the rotary member (2) symmetrically across the through-thickness central plane of the inertial mass (5).

2. The dynamic damper as claimed in claim 1, wherein the rolling member (7) includes a spherical member and a column member.

3. The dynamic damper as claimed in claim 1, wherein the receiving face (11) is formed to have a flat cross-sectional shape or a curved cross-sectional shape perpendicular to the through-thickness central plane of the inertial mass (5).

## Patentansprüche

1. Schwingungsdämpfer mit:
einem Dämpfergehäuse (3), das in einer zylindrischen Form ausgebildet ist und radial außenseitig einer Rotationsmitte eines Rotationsbauteils (2), das Torsionsschwingungen (3) ausgesetzt ist, in einer derartigen Weise ausgebildet ist, dass dessen geometrische Mitte sich parallel mit einer Rotationsmittelachse des Rotationsbauteils (2) erstreckt;
einer Wälzfläche (4), die an einer Innenwand des Dämpfergehäuses ausgebildet ist;
einer Inertialmasse (5), die in dem Dämpfergehäuse (3) gehalten ist, um die Torsionsschwingungen durch deren oszillierende Umfangsbewegung an der Wälzfläche (4) zu dämpfen, die aus der Torsionsschwingung folgt; und
einem Paar Empfangsflächen (11), das an der Wälzfläche (4) symmetrisch über eine Dickendurchgangsmittelebene (ts) der Initialmasse (5) ausgebildet ist;
wobei die Empfangsflächen (11) in solch einer Weise ausgebildet sind, dass deren Reaktionskräfte jeder darauf durch die Initialmasse (5) ausgeübten Last von zwei über die Dickendurchgangsmittelebene (ts) der initialen Masse (5), die senkrecht zu einer Axialrichtung des Rotationsbauteils (2) ist, symmetrischen Richtungen einzelnen entgegenwirken und dass Angriffslinien der Reaktionskräfte die Dickendurchgangsmittelebene (ts) schneiden, sodass Komponenten von jeder Reaktionskraft in der Axialrichtung in entgegengesetzten Richtungen gleich wirken, wobei das Paar Empfangsflächen (11) an beiden Breitenenden der Wälzfläche (4) oder an einer Breitenmitte der Wälzfläche (4) ausgebildet ist, wobei die Initialmasse (5) Folgendes aufweist:
ein Gewicht, das eine vorbestimmte Masse hat;
eine Vielzahl von Wälzkörper (7), die an der Wälzfläche (4) rollen; und
ein Haltebauteil (8), das den Wälzkörper (7) in einer drehbaren Weise hält, **dadurch gekennzeichnet, dass**
eine Vielzahl von Reihen der Wälzkörper (7) in der Umfangsrichtung des Rotationsbauteils (2) symmetrisch über die Dickendurchgangsmittelebene der Initialmasse (5) angeordnet ist.

2. Schwingungsdämpfer gemäß Anspruch 1, wobei der Wälzkörper (7) ein kugelförmiges Bauteil und ein Säulenbauteil enthält.

3. Schwingungsdämpfer gemäß Anspruch 1, wobei die Empfangsfläche (11) ausgebildet ist, um eine flache Querschnittsform oder eine gekrümmte Querschnittsform senkrecht zu der Dickendurchgangsmittelebene der Initialmasse (5) zu haben.

## Revendications

1. Amortisseur dynamique, comprenant :
un carter d'amortisseur (3) formé selon une forme cylindrique et formé dans un côté radialement extérieur d'un centre de rotation d'un organe rotatif (2) soumis à des vibrations de torsion (3) d'une manière telle qu'un centre géométrique de celui-ci s'étend parallèlement à un axe central de rotation de l'organe rotatif (2) ;
une surface de roulement (4) formée sur une paroi intérieure du carter d'amortisseur ;
une masse d'inertie (5) maintenue dans le carter d'amortisseur (3) pour amortir les vibrations de torsion par un mouvement oscillant circonférentiel de celle-ci sur la surface de roulement (4) résultant de la vibration de torsion ; et
une paire de faces de réception (11) qui est formée sur la surface de roulement (4) de manière symétrique sur un plan central à travers l'épaisseur (ts) de la masse d'inertie (5) ;
dans lequel les faces de réception (11) sont formées d'une manière telle que des forces de réaction de celles-ci contrent individuellement chaque charge exercée à celles-ci par la masse d'inertie (5) depuis deux directions de manière symétrique sur le plan central à travers l'épaisseur (ts) de la masse d'inertie (5) perpendiculaire à une direction axiale de l'organe rotatif (2), et que des lignes d'action des forces de réaction se coupent au niveau du plan central à travers l'épaisseur (ts), de telle sorte que des composantes de chaque force de réaction dans la direction axiale agiront de manière égale dans des directions opposées, dans lequel la paire des faces de réception (11) est formée sur les deux extrémités de largeur de la surface de roulement (4) ou sur un centre de largeur de la surface de roulement (4), dans lequel la masse d'inertie (5) est composée :
d'un poids qui a une masse prédéterminée ;
d'une pluralité d'organes roulants (7) qui roulent sur la surface de roulement (4) ; et
d'un organe de retenue (8) qui maintient l'organe roulant (7) d'une manière rotative, **caractérisé en ce que**
une pluralité de réseaux des organes roulants (7) sont agencés dans la direction circonférentielle de l'organe rotatif (2) de manière symétrique sur le plan central à travers l'épaisseur de la masse d'inertie (5).

2. Amortisseur dynamique selon la revendication 1, dans lequel l'organe roulant (7) inclut un organe sphérique et un organe en colonne.

3. Amortisseur dynamique selon la revendication 1, dans lequel la face de réception (11) est formée pour avoir une forme en coupe transversale plate ou une forme en coupe transversale incurvée perpendiculaire au plan central à travers l'épaisseur de la masse d'inertie (5).
